# EUROPEAN PATENT APPLICATION

(11) **EP 3 093 930 A1**
(43) Date of publication of application: **16.11.2016**
(21) Application number: 15817434.2
(22) Date of filing: 10.11.2015
(51) Int. Cl.: H01R 13/72, H01R 25/00, H01R 13/502, H02G 11/02

(54) **EXTENSION CORD**

(30) Priority: 12.11.2014 ES 201431461 U
(71) Applicant: Fabricacion De Material Electrico S.A., 08110 Montcada I Reixac (Barcelona) (ES)
(72) Inventor: LATRE NAVARRO, Carlos Jose, E-08110 Montcada I Reixac (Barcelona) (ES)
(74) Representative: Durán-Corretjer, S.L.P.
(86) International application number: PCT/ES2015/070800
(87) International publication number: WO 2016/075348

(57) **Abstract**

An extension lead having a body provided with at least one power socket (2, 3) area for receiving connecting plugs, and having inside it electrical connection means, and a cable (4) for connecting to the electrical power network with a connecting plug (41) at its end that exits from the said body, wherein the body has externally two flexible covers (1,1'), one upper cover (1') and one lower cover (1), which form an internal cavity that encircles the said body and allows the electrical power network connecting cable (4) to be housed in wound form.

## Description

The present invention relates to devices whose purpose is to allow the connection of at least one appliance to the electrical power network, usually referred to as extension leads. The improved extension lead of the present invention, with at least one power socket, has substantial characteristics of novelty and inventive step with respect to the extension leads currently known.

Devices of this type usually comprise a casing or body consisting of two pieces joined together, intended to house in its interior the connecting elements for the plugs, in such a way that the body has one or more housings for the plugs that will be connected to the base of the power socket. Such extension leads also have a cable of variable length that makes it possible to supply the said socket or sockets with current. Such extension cables are widely used, both in the domestic sector and in other applications, such as offices or workplaces of any kind.

In their known versions, such extension leads with at least one power socket are simply placed on the ground or on another extension lead, on the lower surface of their body, generally allowing a high degree of mobility.

The mains connection cable of variable length poses storage problems when the end user wishes to store or transport the extension lead. Transporting and storing the device appropriately in a manner convenient for the user is problematic due to the length of the cable without affecting the device.

The present invention therefore aims to provide a solution to the above-mentioned storage and transport problems. To this end, the present invention describes an extension lead with at least one power socket that has means for facilitating the winding of the supply cable around the said power socket or sockets.

More in particular, the present invention describes an extension lead having a body provided with at least one power socket area for receiving connecting plugs having inside it electrical connection means, and a cable for connecting to the electrical power network with a connecting plug at its end that exits from the said body, characterised in that the body has externally two flexible covers, one upper cover and one lower cover, which form an internal cavity that encircles the said body and allows the electrical power network connecting cable to be housed in wound form.

The said power socket or sockets has or have around them two covers made from a flexible material: an upper flexible cover and a lower flexible cover. The said covers with rounded edges can be inverted, opening up the internal cavity situated between the upper flexible cover and the lower flexible cover, thus making it possible to store or extract in a tidy and simple fashion the said cable wound around the power socket or sockets without the need for any additional tool. In addition, the covers make it possible to use only the length of cable necessary at any given moment.

The extension lead has a body provided with at least one power socket area for receiving connecting plugs and having inside it the electrical connection means, and a cable for connecting to the electrical power network, which has a connecting plug at its end. Preferably, the extension lead comprises two flexible covers, one upper cover and one lower cover, which form an internal cavity housing the cable wound around at least one power socket.

Preferably, the body of the extension lead has a connection in the power socket that conforms to IEC 60884-1, also known as a "Schuko" socket or type F socket defined as a CEE 7/3, or any other type of standardised connection, as well as any type of USB connector, etc.

Preferably, the housings of the power socket have a safety system which, when the connecting plugs are inserted, allow the electrical connection to be made only if a certain threshold force is exceeded simultaneously in both power socket housings, by means of the connecting plugs.

Preferably, the cover is made from a flexible and deformable material, formed by a securing ring and a skirt.

Preferably, the skirt of the covers can be inverted, in such a way as to define a free space that allows the electrical cable to be wound around at least one power socket.

Preferably, the covers are transparent or opaque.

Preferably, the said body comprises a first part of the power socket and a second part of the power socket which are joined together. In the present invention, the said parts are referred to as upper part and lower part as synonyms of first and second part, without thereby implying that the device forming the subject of the present invention is claimed only in one determined position or configuration. More preferably, the said parts have cup shape.

Preferably, the lower flexible cover has an opening in the securing ring of the lower flexible cover that coincides with the opening of the lower part of the power socket, allowing the cable to be secured and wound more easily around at least one power socket. More preferably, said opening is situated in a plane different from the interface plane between the upper part and the second part of the power socket. Advantageously, this can be achieved thanks to the opening comprising a free space located between a recess on the exterior wall of the lower part of the power socket and a mating projection on the wall of the upper part of the power socket which penetrates in the said recess.

Even more preferably, the device forming the subject of the present invention will additionally comprise a device for fixing the cable in the interior of the said body.

Preferably, the lower flexible cover has an opening in the securing ring that allows the cable to be secured and wound more easily around at least one power socket. Preferably, the join between the upper part of the power socket and the lower part of the power socket has a number of slots into which mating projections of the flexible covers are inserted.

For a clearer understanding, some drawings of an embodiment of the extension lead forming the subject of the present invention are attached by way of non-limitative explanatory example.
Figure 1 shows an exploded perspective view of the main elements of a first embodiment of the device of the present invention.
Figure 2 shows a perspective view of the embodiment of Figure 1.
Figure 3 shows a perspective view of the device of the embodiment of Figure 2, depicting schematically the process of paying out the electrical power network connecting cable around the power socket.
Figure 4 shows a perspective view of the device of Figure 3 with the upper cover open, where it can be seen how the electrical power network connecting cable is stored around the power socket.
Figure 5 shows a perspective view of a second embodiment of the present invention.
Figure 6 shows a perspective view of a third embodiment of the present invention.
Figure 7 shows a perspective view of a fourth embodiment of the present invention.
Figures 8 to 10 show perspective views of a fifth embodiment of the present invention.

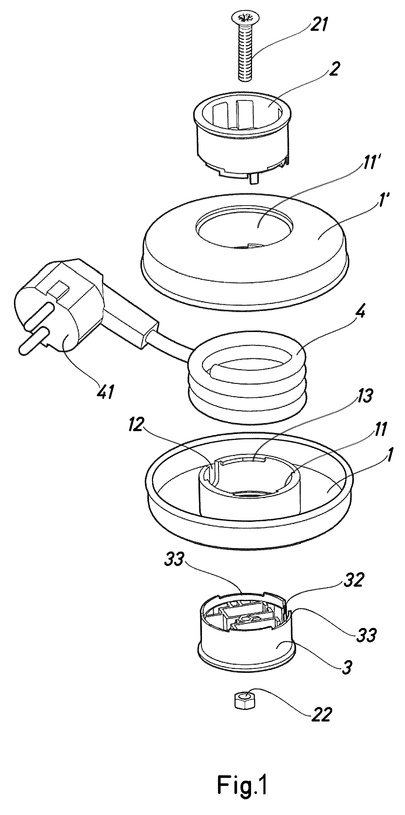

Figure 1 shows an exploded view of an extension lead, which includes a cable -4- for connecting to the electrical power network via a plug at its end -41-. The extension lead of the invention comprises a body formed by two pieces joined together, an upper part of the power socket -2- and a lower part of the power socket -3-, which are joined together by means of a tamper-proof screw -21-in the centre of the cavity of the upper part of the power socket -2- that engages with the lower part of the power socket -3- by means of a nut -22-. The power socket is intended to store inside it the connecting components for the plugs, in such a way that the body has the housings for the plugs that will be connected to the base of the at least one power socket. The cable -4- for connecting to the electrical power network is connected with the power socket through the opening -32- situated in the lower part of the power socket -3- and the opening -12- of the lower flexible cover -1- in order thus to be able to wind the cable -4- more easily and make the connection of the cable with the power socket more rigid and durable. The said cable -4- is stored around the power socket or sockets specifically by being wound around the flexible cover securing rings -11- and -11'-. The said flexible covers are fixed to the power socket at the join between the upper part -2- and the lower part -3- of the said power socket by means of three slots -33- that engage with the three mating projections -13- of the flexible covers -1- and -1'-. The said covers may be transparent, opaque, rounded, made from a flexible material such as silicone or similar, and with a curved skirt capable of being inverted or rotated about itself.

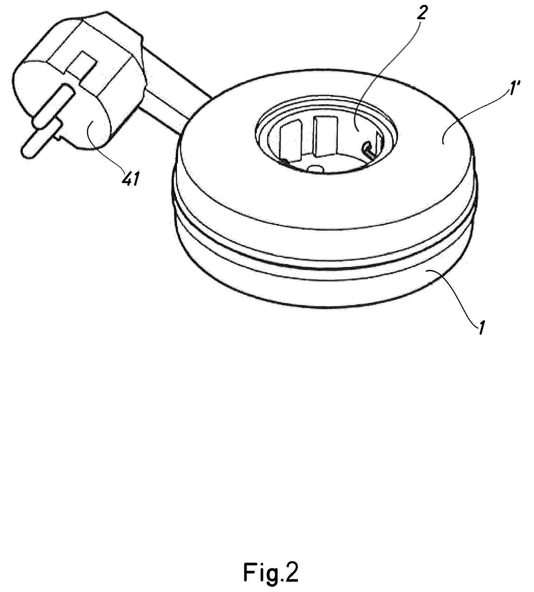

Figure 2 shows a perspective view of the extension lead in an embodiment with the power network connecting cable -4-completely wound around the power socket -2- and housed in the cavity between the upper flexible cover -1'- and the lower flexible cover -1-, leaving visible only the connecting plug -41- situated at the end of the said cable -4-.

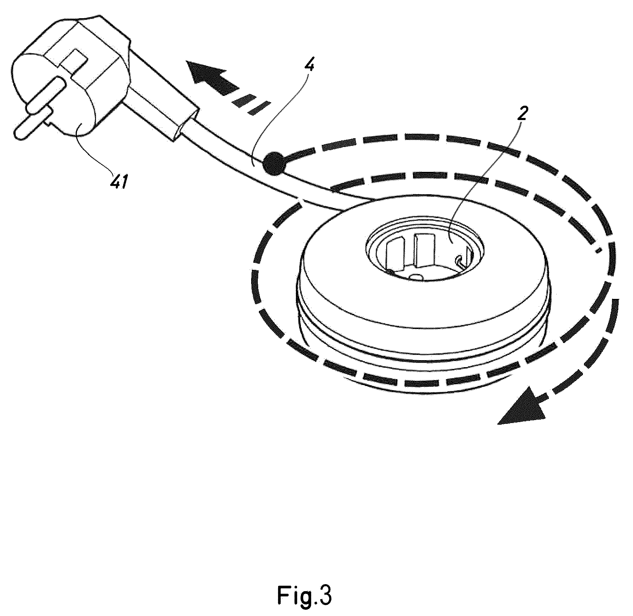

Figure 3 shows specifically the process of paying out the electrical power network connecting cable -4- by pulling the connecting plug -41- in a clockwise direction around the power socket -2-.

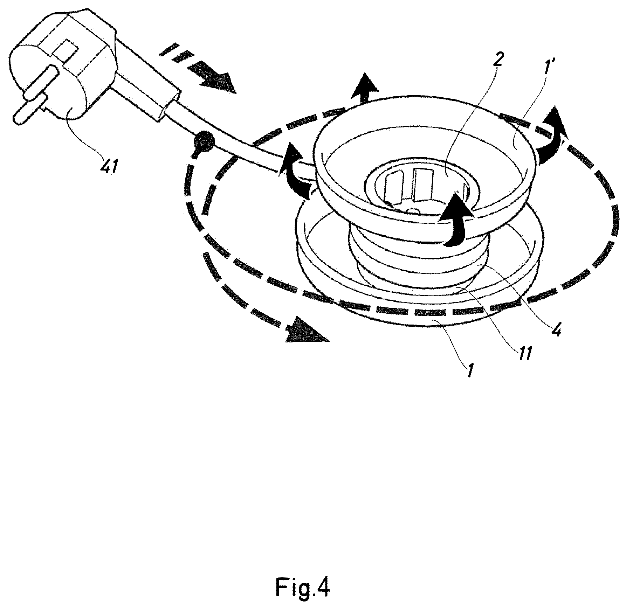

Figure 4 shows the winding of the electrical power network connecting cable -4- by winding the connecting plug -41-in an anti-clockwise direction around the power socket -2-. To make the winding of the said cable -4- easier, it is recommendable to turn over or invert the flexible covers -1- and -1'-, taking advantage of their flexibility due to the fact of their being made from a flexible material, as can be seen in the case of the upper flexible cover -1'-, and thus be able to easily wind the cable -4-around the securing rings of the covers. In this case, the securing ring of the lower cover -11- is seen.

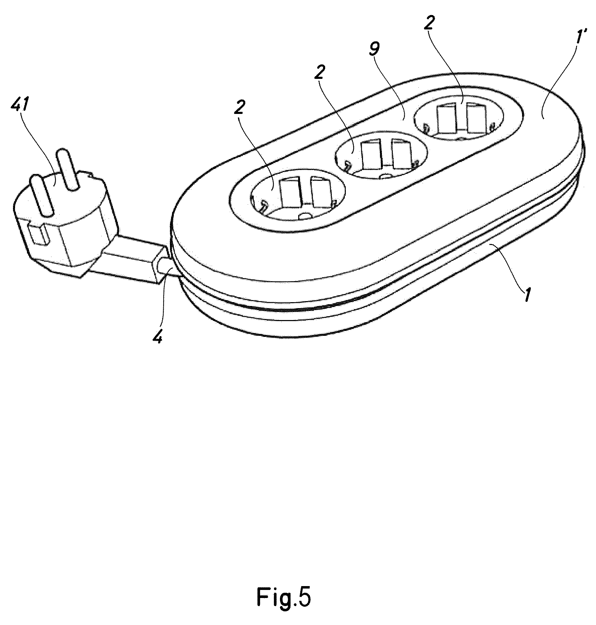

Figure 5 shows a second embodiment of a device according to the present invention with more than one power socket.

In this case it has three power sockets -2- in an in-line configuration. These power sockets -2- are held in place by a common power socket body -9-. The combination of the upper flexible cover -1'- and the lower flexible cover -1-forms a cavity in its interior where the electrical power network connecting cable -4- is wound around the common body of the power sockets -9- by means of the connecting plug -41- situated at the end of the cable -4-.

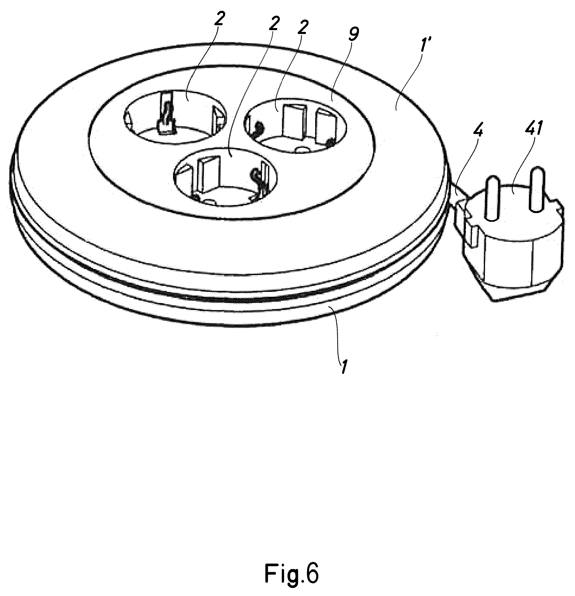

Figure 6 shows another embodiment of the device forming the subject of the present invention with more than one power socket. In this case it has three power sockets -2-in a triangular configuration. These power sockets -2- are held in place by a circular common power socket body -9-. The combination of the upper flexible cover -1'- and the lower flexible cover -1- forms a cavity in its interior where the electrical power network connecting cable -4- is wound around the common body of the power sockets -9- by means of the connecting plug -41- situated at the end of the cable -4-.

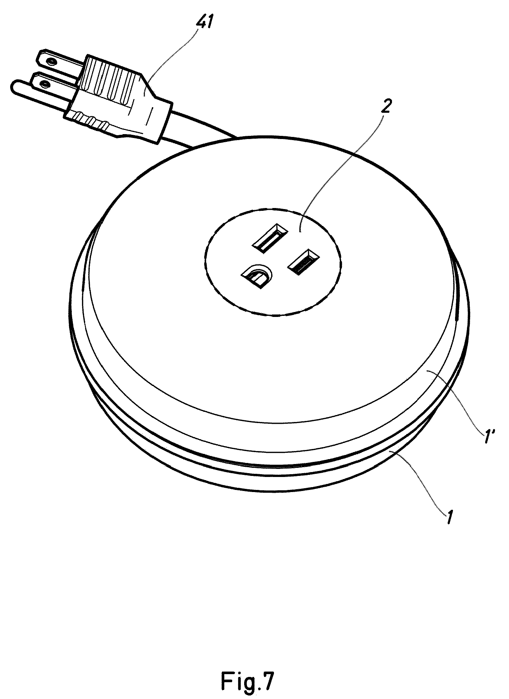

In figure 7, another embodiment is shown with power socket and plug type B, NEMA 5, with three poles, as the standardised type in countries like USA and Mexico. It is observed that the power socket -2- is situated in the surface, and not in a cavity like in the previous examples, and that the connection plug -41- is of the NEMA type.

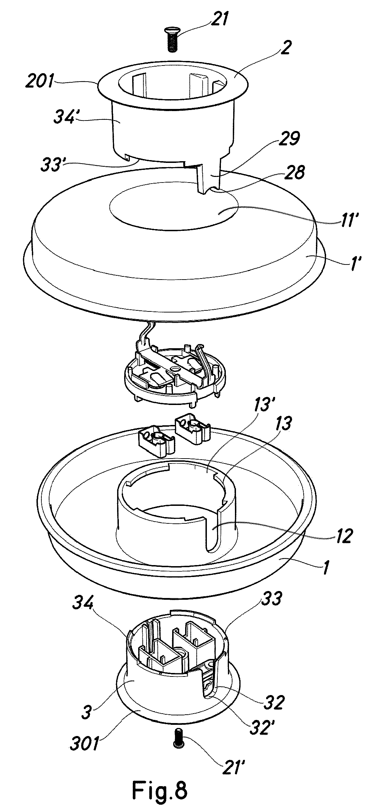

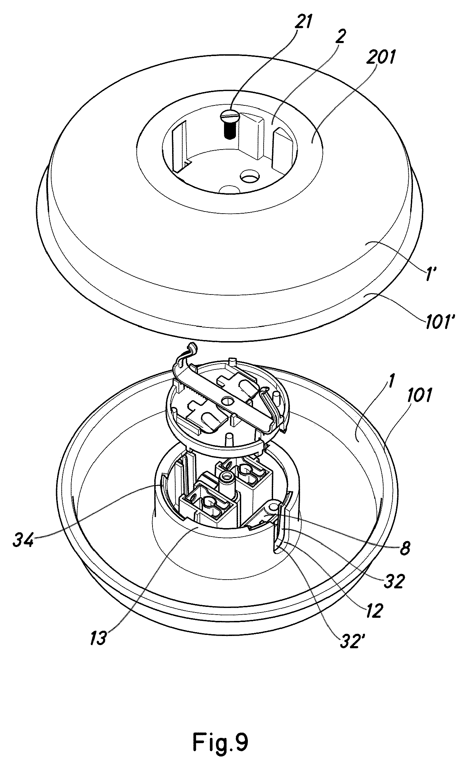

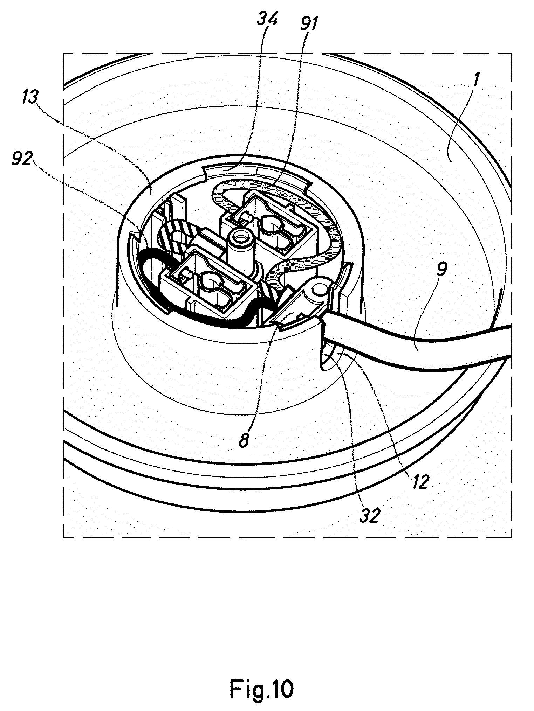

In figures 8 to 10 an additional example of an embodiment of the present invention is shown. Equal or equivalent elements have been referred to with the same numbers in the figures, and they are therefore not described profoundly.

In figures 8 to 10, the upper part and the lower part of the power socket -2-, -3- have cup shape, and contain internally the structural and electric elements of the socket. At their ends, the cups have fins -201-,-301-around their perimeter which cover the interface between the covers -1-,-1'- and the cups -2-,-3-, and which can press one cover against the other, contributing both to the packaging and to the inviolability of the device. Additionally, battlemented walls with clip joining elements -34- between cups -2-,-3- have been introduced in the areas of the cups -2-,-3- which are free of the slots -33-,-33'- that engage with the projections -13- of the covers -1-,-1' . Thanks to the cups being joined by pressure, the joint can be performed by two short screws - 21-,-21'-, without the need to use a through bolt with nut, although this solution can also be suitable.

The example of figures 8 to 10 also shows a solution to the lateral and diagonal stresses that the cable -9- must support due to the process of winding and unwinding. The opening through which the cable -9- enters to the interior of the device consists of a recess -32- formed on the exterior wall of the lower part of the power socket -3-, in which a projection -29- formed on the exterior wall of the upper part of the power socket -2- enters. The length of the projection -29- is less than the length of the recess -32-, thereby leaving an open area -32'-. The projection has at its end a rounded area -28- to receive the cable -9- in a tight manner. In practice, the cable is placed first and then the cups (upper part and lower part of the power sockets -2-,-3-) are closed. As a result, if wished, the projection compresses the cable, exerting pressure on it and therefore fixing it. The projection - 29-, when contacting the walls of the recess -32- applies a greater resistance against the stresses provoked by the movement of the cable in the direction of the joint between cups, which would tend to open the device. On the other hand, the lack of openings in the cable winding direction, the winding of the cable does not produce stresses tending to open the device. This is due to the fact that the interface between the upper part and the lower part of the power socket -2-,-3- (cups) is located in a plane different than the plane of the cable -9-entrance opening (area -32'-).

To ensure a better fixing, additionally, the power socket has internally a further device -8- for fixing the cable. This device can be standard and one of its functions is to secure the cable against tensile stresses, said device being complementary to the fixation that may be carried out by the entrance opening created between the projection -29- and the recess -32- of the upper part and lower part of the power socket -2-,-3-. The lower cover -1- has a recess -12- on its wall -12- which mates with the recess - 32- of the lower part of the power socket -3-.

Beyond the device for fixing the cable -8-, the cable divides -91-,-92- for its connection with the terminals.

Additionally, the skirt of the covers -1-,-1'- end in exterior lips -101-,-101'- around the perimeter which contact each other and are of a greater width than that of the covers.

All characteristics of the different examples are interchangeable.

In the present application, the terms upper part and lower part have been used for a convenient description and not in a limitative sense, being equivalent to the first part and the second part, without the intention to limit the invention to one particular position of the device forming the subject of the present invention.

Although the examples shown represent the extension lead that comprises at least one power socket with an electrical power network connecting cable that is capable of being wound around the said base without a switch, it will be understood that the invention will be equally applicable to bases provided with a switch.

As will be understood, a person skilled in the art could introduce multiple variants into the embodiment shown by way of example after grasping the essential nature of the present invention, and such variants must be considered to be included in the scope of the present invention if they fall within the scope of the following claims.

## Claims

1. An extension lead having a body provided with at least one power socket area for receiving connecting plugs having inside it electrical connection means, and a cable for connecting to the electrical power network with a connecting plug at its end that exits from the said body, **characterised in that** the body has externally two flexible covers, one upper cover and one lower cover, which form an internal cavity that encircles the said body and allows the electrical power network connecting cable to be housed in wound form.

2. An extension lead comprising at least one power socket, according to claim 1, **characterised in that** the cover is made from a flexible and deformable material, formed by a securing ring and a skirt.

3. An extension lead comprising at least one power socket, according to any one of claims 1 to 2, **characterised in that** the skirt of the covers can be inverted, in such a way as to define a free space that allows the electrical cable to be wound around the at least one power socket.

4. An extension lead according to any one of claims 1 to 3, **characterised in that** the flexible covers are transparent.

5. An extension lead according to any one of claims 1 to 4, **characterised in that** the flexible covers are opaque.

6. An extension lead, according to any one of claims 1 to 5, **characterised in that** the body comprises an upper part of the power socket and a lower part of the power socket, the lower part of the power socket having an opening that coincides with the opening of the securing ring of the lower flexible cover, allowing the cable to be secured and wound more easily around the at least one power socket.

7. An extension lead, according to claim 6, **characterized in that** said opening is situated in a plane different from the interface plane between the lower part and the upper part of the power socket.

8. An extension lead, according to claim 7, **characterized in that** said opening comprises a free space located between a recess on the exterior wall of the lower part of the power socket and a mating projection on the wall of the upper part of the power socket which penetrates in the said recess.

9. An extension lead, according to any one of claims 6 to 8, **characterised in that** the device additionally comprises in the interior of said body a further device for fixing the cable.

10. An extension lead, according to any one of claims 1 to 9, **characterised in that** the said upper part and the said lower part of the power socket have cup shape.

11. An extension lead, according to any one of claims 1 to 10, **characterised in that** the lower flexible cover has an opening in the securing ring, allowing the cable to be secured and wound more easily around the at least one power socket.

12. An extension lead, according to any one of claims 8 to 11, **characterised in that** the said opening coincides in shape with the said recess on the exterior wall of the lower part of the power socket.

13. An extension lead, according to any one of claims 1 to 12, **characterised in that** the join between the upper part of the power socket and the lower part of the power socket has a number of slots into which mating projections of the said flexible covers are inserted.

14. An extension lead, according to any one of claims 1 to 13, **characterised in that** body of the extension lead has, in the power socket, a connection type "Schuko" or type F socket defined as a CEE 7/3, or any other type of standardised connection, as well as any type of USB connector.

15. An extension lead, according to claim 14, **characterized in that** the housings of the power socket have a safety system which, when the connecting plugs are inserted, allow the electrical connection to be made only if a certain threshold force is exceeded simultaneously in both power socket housings, by means of the connecting plugs.

16. An extension lead, according to any on of claims 1 to 15, **characterized in that** it has a connection type NEMA in the power socket.
